(19) Europäisches Patentamt / European Patent Office / Office européen des brevets

(11) **EP 1 975 673 A2**

(12) **EUROPEAN PATENT APPLICATION**

(43) Date of publication:
**01.10.2008 Bulletin 2008/40**

(51) Int Cl.:
*G02B 23/12* (2006.01)

(21) Application number: **08101179.3**

(22) Date of filing: **31.01.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **30.03.2007 US 731354**

(71) Applicant: **Ford Global Technologies, LLC Dearborn, MI 48126 (US)**

(72) Inventors:
 • **Tijerina, Louis**
   **Dearborn, MI 48128 (US)**
 • **Ebenstein, Samuel**
   **Southfield, MI 48034 (US)**
 • **Prakah-Asante, Kwaku**
   **Commerce Township, MI 48382 (US)**
 • **Rodin, Yelena**
   **Southfield, MI 48076 (US)**

(74) Representative: **Messulam, Alec Moses**
   **A. Messulam & Co. Ltd.**
   **43-45 High Road**
   **Bushey Heath**
   **Hertfordshire WD23 1EE (GB)**

(54) **Display for an automotive night vision system**

(57) The present invention relates to a night vision system 10 that provides enhanced road scene imagery from an image produced by a low resolution camera 12, a human machine interface visual display 16 to display the visual image and a spatial filter to filter the visual signal so as to produce an improved visual image.

FIG. 1

EP 1 975 673 A2

**Description**

Field of the invention

The present invention generally relates to a night-vision system human-machine interface (HMI) and in particular to an HMI visual display that provides enhanced road scene imagery from low-resolution cameras.

Background of the invention

Night vision systems are intended to improve night-time detection of pedestrians, cyclists and animals. Such systems have been on the market in the United States since Cadillac introduced a Far IR night vision system as an option in the late 1990s. High-resolution night vision cameras can provide the driver with a more picture-like display of the road scene ahead than a low-resolution camera but at greater expense. In particular high resolution Far IR sensors can be very costly. These sensors are often 320 x 240 pixels. Software techniques have been developed which can detect pedestrians, cyclists and animals using Far IR images of a much lower resolution such as 40 x 30 pixels. The substantially lower cost of these sensors offers greater potential to be widely deployed on cars and trucks at an affordable price. Unfortunately, the raw images from these sensors are very difficult for the driver to understand and interpret.

The human visual system response can be analyzed in terms of spatial frequencies. Object details are perceived in the sharp edges of transition between light and dark. Fine details can be mathematically represented as high spatial frequencies. Perception of overall object form, on the other hand, can be represented by low spatial frequencies. It has been known for some time that if higher spatial frequencies are filtered out of a coarse image, the form of the object can generally be identified by the remaining low-frequency content. A blurred image is an example of this effect.

The effect can be achieved by squinting, defocusing and moving away from the coarse picture or moving either the picture or one's head. Alternatively this can be achieved by modifying the image through software manipulation.

In human face recognition, filtering of frequencies about a critical band needed for face recognition is used to accomplish the enhancement. However, automotive applications do not require that level of display information and simpler means of spatial frequency filtering may be sufficient. By analogy, critical band filtering is needed to identify whose face is being displayed. Low pass filtering is sufficient to know if it is a face and not something else.

This fact of human perception has been implemented in many ways, including machine vision, automatic face recognition and others. However, the application of this invention to a low resolution night vision system represents a unique application. The invention replicates the effect of blurring a coarse image to achieve the form perception desired. Moving away from the coarse image improves form perception but at the same time makes those images smaller, thus introducing other problems for driver perception. The invention maintains the original image size through various methods of software manipulation (e.g., applying a median filter, a low-pass filter, or a band-pas filter specific to the camera and scene characteristics) to provide enhanced form perception from low resolution camera images while at the same time maintaining a constant image display size.

Summary of the invention

According to a first aspect of the invention there is provided a night vision imaging system for a vehicle comprising a low resolution sensor camera to produce an image signal in response to a perceived object, a signal processor adapted to receive the image and process the image into a visual signal, a spatial filter to filter the visual signal to produce a visual image and a human machine interface visual display to display the visual image.

The low resolution sensor camera may be a low resolution infrared sensor camera for perceiving an object and producing a pixilated low resolution image block with edges in response to the image signal and the spatial filter may be a spatial filter adapted to blur out high spatial frequencies provided by said block edges of the low resolution image block to produce a visual image.

The low resolution sensor camera may have a resolution in the range of 40 x 30 pixels to 80 x 60 pixels.

The spatial filter may be at least one lens in close proximity to the visual display to produce an image of desired visual acuity.

The spatial filter may be a lens applied to a display upon which the image appears, the lens providing sufficient refraction to blur the pixilated elements of the image to produce a visual acuity sufficient to discern the form of the displayed image.

The lens may produce a visual acuity in the range of 20/20 to 20/80.

Alternatively, the spatial filter may be a digital filter.

The filter may be a low pass digital spatial filter.

The spatial filter may be a low pass spatial filter to the camera input and the spatial filter may be adapted to spatially filter the image block edges dynamically to produce a discernable image.

As yet another alternative, the spatial filter may be an analog filter.

The filter may be a low pass analog spatial filter.

As yet a further alternative, the spatial filter may be a median filter.

The low resolution sensor camera may be a low resolution infrared sensor camera for perceiving an object and producing a pixilated low resolution image block and the median filter may have a range determined empirically based upon the low resolution image block.

The display may be a night vision human machine interface (HMI) video display.

According to a second aspect of the invention there is provided motor vehicle having a night vision system constructed in accordance with said first aspect of the invention.

According to a third aspect of the invention there is provided a method of producing usual images form a low resolution night vision system, the method comprising acquiring a low resolution image as a signal, inputting the low resolution image signal, subjecting the image to spatial filtering and displaying the filtered image on a human machine interface visual display.

The spatial filtering may be a frequency filter based upon a Fourier transform.

The Fourier transform may be the Gaussian method.

Alternatively, the spatial filter may be a Butterworth filter.

The Fourier transform may alternatively be a median filter.

Brief description of the drawings

The invention will now be described further, by way of example, with reference to the accompanying drawings, in which :-

Figure 1 is a schematic representation of a low resolution FAR IR night vision system for use on a vehicle;
Figure 2 shows a high resolution image captured with a 320 x 240 FAR IR sensor;
Figure 3 shows the same image as Figure 2, captured with a 40 x 30 FAR IR sensor;
Figure 4 shows the same image as Figure 3 which has been subjected to image enhancement to blur edges of the image pixel blocks; and
Figure 5 is a flow chart showing a method of image enhancement according to the present invention.

Detailed description of the preferred embodiment(s)

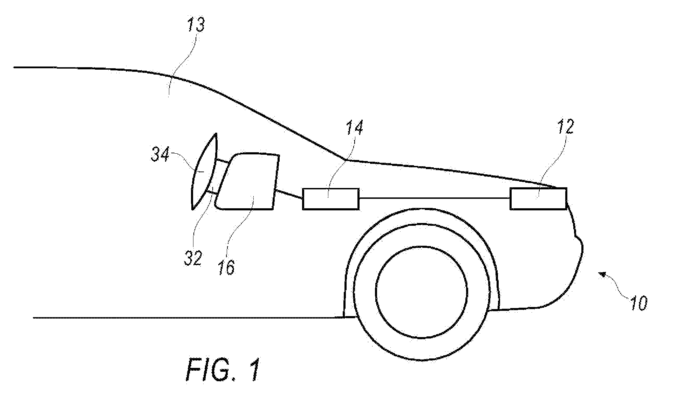

Turning now to the drawings, Figure 1 is a schematic representation of a low resolution FAR IR night vision system 10 for use on a vehicle. Although it is described as being adapted for use in a vehicle, it is understood by those skilled in the art that the low resolution night vision FAR IR system can be used in any setting, whether vehicle or not.

Specifically, system 10 is comprised of a low resolution camera sensor 12, having a resolution of from about 40 x 30 pixels and preferably having a resolution of about 80 x 60 pixels. While the stated resolution of the sensor 12 is not limiting, it is understood that high resolution camera sensors of prior systems are relatively expensive when compared to low resolution sensors and may not be necessary for all applications wherein a night vision system is desired.

The sensor 12 is electronically connected to a signal processor 14 which is also electronically connected to a visual display 16. The signal processor 14 functions to receive the signal from the sensor and transmit it to the visual display for viewing by the driver or other occupant of the vehicle.

The system 10 is mounted at the front of a vehicle 13 with the sensor 12 in a forward position relative to a driver and the visual display 16 in close proximity to the driver, or in any other convenient position relative to the driver, so that the driver may process the images detected by the sensor 12 and determine the best course of action in response to the images perceived.

However, it will be appreciated by those skilled in the art that the sensor may be mounted in the rear or in any part of the vehicle from where it is desired to receive images. In addition, although only one system is described, a vehicle may be equipped with more than one such system to provide for multiple images to be transmitted to the driver for processing.

It has been an issue in the industry to provide for a cost effective FAR IR night vision system that will provide the driver with usable images. Some manufacturers have opted to provide for high resolution IR FAR night vision systems that may not be suitable or the most cost effective systems for wide distribution over many product lines.

Indeed, the image produced and the cost of the system have in the past been seen as tradeoffs of one another. For example, a low resolution sensor was seen as producing pixilated coarse image blocks that may not be useable to the driver, whereas a high resolution sensor that produces a detailed image may be seen as too costly in some applications.

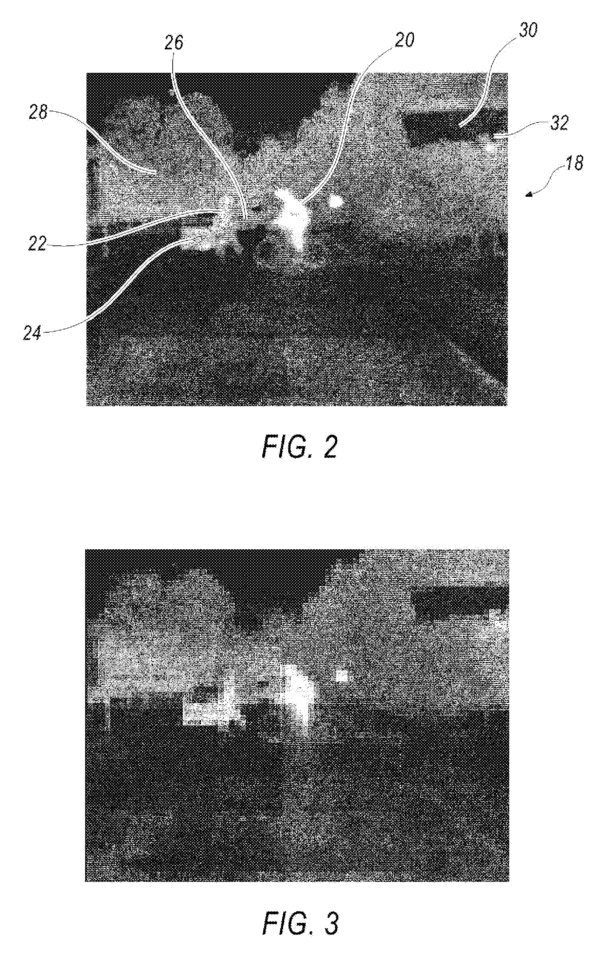

Figure 2 is a representation of a high resolution image captured with a 320 x 240 FAR infrared vision sensor. As can be understood by reviewing the night vision image 18 of Figure 2, an image 20 of a rider on a bicycle , a pedestrian 22, vehicles 24, 26 in opposing lanes of traffic together with trees 28, building 30 and street lamps 32 are apparent.

These images are produced with a high resolution IR camera without filtering. It is apparent that the images are defined and highly pixilated, thereby contributing to the fine detail of the images and the ready ability of a driver to perceive the images presented therein as meaningful objects.

By comparison, Figure 3 is a representation of a low resolution image captured with a low resolution, specifically 40 x 30, FAR infrared vision camera sensor.

In actual practice an 80 x 60 camera sensor would probably be used, but a smaller image has been used to more easily demonstrate the various methods of making a very course image usable.

The image depicted in Figure 3 is the same image as depicted in Figure 2, but is produced using a low resolution camera sensor. The contrast between the two images is striking. In the image, the central figure is coarse and the image is comprised of large pixel blocks with contrasted edges. Indeed the central figure appears abstract and almost unintelligible. Such an image can negatively affect form perception and object-and-event detection. One solution to this problem is to provide driver warnings without a video display, e.g., through a warning light, warning tone, haptic seat alert, etc. This solution is potentially problematic. Without a visual display of the road scene, the driver has limited information upon which to assess the situation. Because the night vision system, by definition, is intended to support the driver when headlamps do not illuminate the object, the driver is delayed in picking up potentially critical information through direct vision. The driver does not know what target has been detected, exactly where it is, how fast it is moving (if it is moving at all), what direction it is traveling and so forth.

Without further processing, the image of Figure 3 is of limited, if any, value in a practical night vision system. In one aspect, the present invention uses frequency filtering software to blur the sharp contrasts at the edges between the pixel blocks of the image to produce a more useable image. It is known that frequency filtering is based on the Fourier Transform. The operator usually takes an image and a filter function in the Fourier domain. This image is then multiplied with the filter function in a pixel-by-pixel fashion:

$$G(k,l) = F(k,l) \ H(k,l)$$

where:

F(k,1) is the input image in the Fourier domain,
H(k,1) the filter foundation and
G(k,1) is the filtered image.

To obtain the resulting image in the spatial domain, G(k,1) has to be re-transformed using the inverse Fourier Transform. A low-pass filter attenuates high frequencies and retains low frequencies unchanged. The result in the spatial domain is equivalent to that of a smoothing filter; as the blocked high frequencies correspond to sharp intensity changes, i.e. to the fine-scale details and noise in the spatial domain image. The most simple lowpass filter is the ideal lowpass. It suppresses all frequencies higher than the *cut-off frequency* $D_0$ and leaves smaller frequencies unchanged. This may be expressed as:

$$H(k,l) = \begin{cases} 1 \ if \ \sqrt{k^2 + l^2} < D_0 \\ 0 \ if \ \sqrt{k^2 + l^2} > D_0 \end{cases}$$

In most implementations, $D_0$ is given as a fraction of the highest frequency represented in the Fourier domain image.

Better results can be achieved with a Gaussian shaped filter function. The advantage is that the Gaussian has the same shape in the spatial and Fourier domains and therefore does not incur the ringing effect in the spatial domain of the filtered image. A commonly used discrete approximation to the Gaussian is the Butterworth filter. Applying this filter in the frequency domain shows a similar result to the Gaussian smoothing in the spatial domain. One difference is that the computational cost of the spatial filter increases with the standard deviation (i.e. with the size of the filter kernel), whereas the costs for a frequency filter are independent of the filter function. Hence, the spatial Gaussian filter is more appropriate for narrow lowpass filters, while the Butterworth filter is a better implementation for wide lowpass filters.

Bandpass filters are a combination of both lowpass and highpass filters and attenuate all frequencies smaller than a frequency $D_o$ and higher than a frequency $D_1$, while the frequencies between the two cut-offs remain in the resulting output image. One obtains the filter function of a bandpass by multiplying the filter functions of a lowpass and of a highpass in the frequency domain, where the cut-off frequency of the lowpass is higher than that of the highpass.

Instead of using one of the standard filter functions, one can also create a special filter mask, thus enhancing or suppressing only certain frequencies. In this way it is possible, for example, to remove periodic patterns with a certain direction in the resulting spatial domain image.

The Gaussian smoothing operator is a 2-D convolution operator that is used to 'blur' images and remove detail and noise. In this sense it is similar to the mean filter, but it uses a different kernel that represents the shape of a Gaussian ('bell-shaped') hump. This kernel has some special properties which are detailed below.

The Gaussian distribution in 1-D has the form:

$$G(x) = \frac{1}{\sqrt{2\pi}\sigma} e^{-\frac{x^2}{2\sigma^2}}$$

where σ is the standard deviation of the distribution.

It is assumed that the distribution has a mean of zero (i.e. it is centered on the line x=0).

The idea of Gaussian smoothing is to use 2-D distribution as a 'point-spread' function and this is achieved by convolution. Since the image is stored as a collection of discrete pixels it is desirable to produce a discrete approximation to the Gaussian function before performing the convolution. In theory, the Gaussian distribution is non-zero everywhere which would require an infinitely large convolution kernel but in practice it is effectively zero more than about three standard deviations from the mean. This permits truncating the kernel at this point.

Once a suitable kernel has been calculated, then the Gaussian smoothing can be performed using standard convolution methods. The convolution can be performed fairly quickly since the equation for the 2-D isotropic Gaussian shown above is separable into x and y components. Thus the 2-D convolution can be performed by first convolving with a 1-D Gaussian in the x direction and then convolving with another 1-D Gaussian in the y direction. The Gaussian smoothing is the only completely circularly symmetric operator which can be decomposed in such a way. A further way to compute a Gaussian smoothing with a large standard deviation is to convolve an image several times with a smaller Gaussian. While this is computationally complex, it can have applicability if the processing is carried out using a hardware pipeline.

The effect of Gaussian smoothing is to blur an image, in a similar fashion to the mean filter. The degree of smoothing is determined by the standard deviation of the Gaussian. It is understood that larger standard deviation Gaussians require larger convolution kernels in order to be accurately represented.

The Gaussian outputs a 'weighted average' of each pixel's neighborhood, with the average weighted ore towards the value of the central pixels. This is in contrast to the mean filter's uniformly weighted average. Because of this, a Gaussian provides gentler smoothing and preserves edges better than a similarly sized mean filter.

One of the principle justifications for using the Gaussian as a smoothing filter is due to its frequency response. Most convolution-based smoothing filters act as lowpass frequency filters. This means that their effect is to remove high spatial frequency components from an image. The frequency response of a convolution filter, i.e., its effect on different spatial frequencies, can be seen by taking the Fourier transform of the filter.

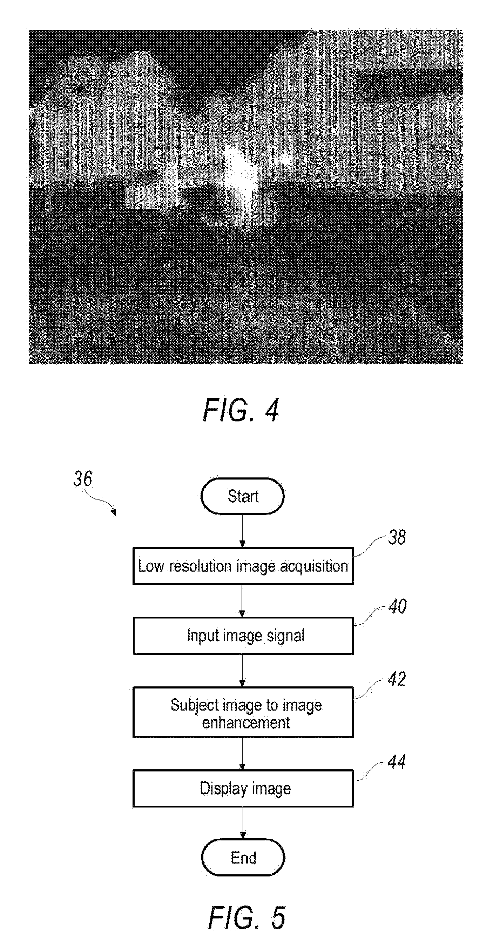

Figure 4 is a representation of the results of a median filter applied to the image of Figure 3. A median filter is normally used to reduce noise in an image and acts much like a mean filter and in many applications a mean filter could be applicable. However, those skilled in the art recognize that a median filter preserves the useful detail in an image better that a mean filter.

A median filter, like a mean filter, views each pixel in an image in turn and looks at its nearby pixel neighbors to determine whether it is representative of its surroundings. Instead of simply replacing the pixel value with the mean of the neighboring pixel values, a median filter replaces it with the median of those values. The median is calculated by first sorting all the pixel values from the surrounding neighborhood into numerical order and them replacing the pixel being considered with the middle pixel value.

A mean filter replaces teach pixel in an image with the mean or average value of its neighbors, including itself. This has the effect of eliminating pixel values that are unrepresentative of their surroundings. Mean filtering is usually thought of as convolution filtering. As with other convolutions, it is built around a kernel that represents the shape and size of the neighborhood to be sampled when calculating the mean. Mean filtering is most commonly used to reduce noise from an image.

As previously stated, Figure 4 is the same image as represented Figure 3 with the difference that the coarse highly pixilated image of Figure 3 has been subjected to median filtering. The median filtering produces an image that blurs the contrasts between the adjacent pixels to achieve a desired form perception. The image is maintained in the original size, but the contrast between the edges of the pixels is blurred such that while it is difficult to discern the face details of the bicycle rider, it is readily apparent that there is a rider in the road and the driver can take appropriate action to conform the operation of the vehicle accordingly.

Turning again to Figure 1 it may be seen that the visual display unit may be equipped with a bezel 32 or any other structure compatible with the mounting of a lens 34 that provides sufficient refraction to blur the pixilated elements of the image to produce an equivalent desired visual acuity. Thus, by use of a lens system, there is no need to pass the low resolution image through an electronic low pass filtering. Rather, in the manner described with reference to this paragraph, the lens would produce an image from the visual display of an acuity of 20/20, 20/40, or 20/80, or any desired visual acuity, that would match what is obtained by moving away from the coarse image until the desired form perception was achieved.

Figure 5 is a flow chart of the steps in a method 36 according to the present invention.

Specifically, step 38 is acquiring a low resolution image.

Step 40 is inputting the image signal through the signal processor.

Step 42 is subjecting the image to enhancement so that the contrasts between coarse, highly contrasted pixels of the image can be attenuated or smoothed so that a usable image can be perceived. This step can, as previously described, be achieved by passing the image through a digital or analog low pass filter, or it can be achieved by passing the image through a lens attached to the visual display to produce an image with the desired visual acuity.

After the contrasts between the coarse highly contrasted pixels have been attenuated, the image is produced in step 44 by displaying the image on a visual display.

Therefore in summary, the present invention is directed to a night vision HMI video display that allows a driver in a vehicle so equipped to see object forms even though the night vision sensor is of low or coarse resolution. Low camera resolution creates a highly pixilated, abstract image when viewed on a VGA video display. Without further treatment, this image is generally without recognizable form or detail. The lowest resolution images (40 x 30) appear abstract, without recognizable detail or form. As the resolution increases, perception of both form and details improves. However, such increased resolution has an associated increase in cost of the camera needed to capture increasing levels of detail.

The invention takes the low resolution image and manipulates it so as to improve form perception. The concept is to blur out high spatial frequencies provided by the edges of the low resolution image's block image elements. Form and motion perception are thereby improved by the spatial frequency filtering.

There are several methods contemplated to implement the invention. One method is to apply a lens to the bezel of a video display that provides sufficient refraction to blur the image's pixilated elements. The lens would provide an equivalent visual acuity (e.g., 20/20, 20/40, 20/80, etc.) that matched what is obtained by moving away from the coarse image until the desired form perception was achieved.

Another method is to apply a low-pass digital or analog filter to the camera output so as to achieve the desired effect. The filter's cutoff frequency and order needed for the night vision application would depend on the coarseness of the specific system's camera. This would be empirically determined by human experimentation with representative night vision scenes, dynamically presented at the system's frame rate.

A third method is to apply a median filter to the camera's output. The degree or range of the median filter would be determined empirically to achieve the desired effect. Implementation feasibility, packaging considerations, cost and human factors requirements will determine the most suitable method for a specific application.

It will be appreciated by those skilled in the art that although the invention has been described by way of example with reference to one or more embodiments it is not limited to the disclosed embodiments and that one or more modifications to the disclosed embodiments or alternative embodiments could be constructed without departing from the scope of the invention as set out in the appended claims.

## Claims

1. A night vision imaging system for a vehicle comprising a low resolution sensor camera (38) to produce an image signal in response to a perceived object, a signal processor (42) adapted to receive the image and process the image into a visual signal, a spatial filter to filter the visual signal to produce a visual image and a human machine interface visual display (16) to display the visual image.

2. A system as claimed in claim 1 wherein the low resolution sensor camera is a low resolution infrared sensor camera for perceiving an object and producing a pixilated low resolution image block with edges in response to the image signal and the spatial filter is a spatial filter adapted to blur out high spatial frequencies provided by said block edges of the low resolution image block to produce a visual image.

3.  A system as claimed in claim 1 or 2, wherein the spatial filter is at least one lens in close proximity to the visual display to produce an image of desired visual acuity.

4.  A system as claimed in any of claims 1 to 3, wherein the spatial filter is a lens applied to a display upon which the image appears, the lens providing sufficient refraction to blur the pixilated elements of the image to produce a visual acuity sufficient to discern the form of the displayed image.

5.  A system as claimed in claim 1 or 2, wherein the spatial filter is a low pass digital filter.

6.  A system as claimed in claim 1 or 2, wherein the spatial filter is a low pass spatial filter to the camera input and the spatial filter is adapted to spatially filter the image block edges dynamically to produce a discernable image.

7.  A system as claimed in claim 1 or 2, wherein the spatial filter is a low pass analog spatial filter.

8.  A system as claimed in claim 1 or 2, wherein the spatial filter is a median filter.

9.  A motor vehicle having a night vision system as claimed in any of claims 1 to 8.

10.  A method of producing usual images from a low resolution night vision system, the method comprising acquiring a low resolution image as a signal, inputting the low resolution image signal, subjecting the image to spatial filtering and displaying the filtered image on a human machine interface visual display.

11.  A method as claimed in claim 16 wherein the spatial filtering is a frequency filter based upon a Fourier transform.

FIG. 1

FIG. 2

FIG. 3

*FIG. 4*

*FIG. 5*